(19) Europäisches Patentamt
European Patent Office
Office européen des brevets

(11) **EP 3 907 906 A1**

(12) **EUROPEAN PATENT APPLICATION**

(43) Date of publication:
**10.11.2021 Bulletin 2021/45**

(51) Int Cl.:
***H04B 7/26*** (2006.01)  ***H04W 56/00*** (2009.01)

(21) Application number: **20173273.2**

(22) Date of filing: **06.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefónica Germany GmbH & Co. OHG 80992 München (DE)**

(72) Inventors:
• **Höhn, Dr. Anja**
**82299 Türkenfeld (DE)**

• **Leth-Espensen, Mads**
**82110 Germering (DE)**
• **Müllner, Robert**
**81479 München (DE)**
• **Nikolendzic, Sasa**
**85570 Markt Schwaben (DE)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **A METHOD OF HANDLING A DEGRADATION OF TIME SYNCHRONICITY BETWEEN BASE STATIONS OF A MOBILE CELLULAR NETWORK AND A MOBILE CELLULAR NETWORK FOR CARRYING OUT SUCH METHOD**

(57) The present invention is directed to a method of handling a degradation of time synchronicity between base stations of a mobile cellular network, in particular supporting the 4G, 5G or any higher mobile communication standard, wherein the base stations perform Time Division Duplex (TDD) mode on a communication link with at least one User Equipment (UE), and wherein an internal time reference is required for control of the transmission time interval of the TDD mode, said internal time reference of the base stations is synchronized with an external synchronisation clock via a synchronisation link, characterised in that in case a link failure of the synchronisation link of a considered base station and/or a degradation of synchronicity of the internal time reference of the considered base station to any other base station, in particular to at least one adjacent base station, is detected, a TDD mode operation of the considered base station is maintained and at least one out-of-synchronisation measure is performed at the considered base station in order to mitigate a possible interference on surrounding cells caused by the degradation of synchronicity or the link failure of the considered base station.

EP 3 907 906 A1

**Description**

The presented invention relates to the field of mobile telecommunication systems, in particular a method of controlling a mobile cellular network consisting of a number of base stations performing Time Division Duplex (TDD) mode on the communication link with a UE wherein the internal time reference of at least one of the base stations is synchronised with an external synchronisation clock via a synchronisation link and wherein said internal time reference is required for control of the transmission time interval in TDD mode.

In TDD, the Transmission Time Interval (TTI) is pre-configured for downlink (D), for uplink (U) or to be switched (S) from downlink to uplink. The Fourth Generation (4G) of the 3rd Generation Partnership Project (3GPP) supports seven different TDD patterns, which offer uplink to downlink ratios from approximately 60:40 to 10:90. The Fifth Generation (5G) supports even a higher number of TDD configurations. In 5G, radio frames and sub-frames are of fixed length. A sub-frame is subdivided into slots consisting of symbols. Slots and symbols are of flexible length depending on the subcarrier spacing. One slot is the smallest scheduling time unit to transmit or receive data. The slots can be configured as downlink slots, uplink slots, or as special (S) slots between the downlink and the uplink slots. Some of the symbols in a special slot can be used for downlink transmissions, some for uplink transmissions and some are left free, e.g. to allow the transceiver to switch the direction. The symbols in the slot are defined as D, U, or flexible (F) symbols. The uplink/downlink configuration of the channel is contained in the tdd-UL-DL-ConfigurationCommon information element and signalled via Layer 3.

A severe problem in TDD networks is caused by cross-link interference between neighbouring cells, i.e. a first User Equipment (UE) transmitting in uplink direction, while a second UE located in the vicinity of the first UE but connected to a neighbouring cell, which is already in downlink mode. This cross-link interference can have severe variations in its interference power and the Signal to Interference plus Noise Ratio (SINR) between successive TTIs even if the radio channel itself does not change. This can seriously deteriorate the performance of Adaptive Modulation and Coding (AMC) and hence the throughput.

Cross-link interference exists if different TDD patterns are used within one geographical area. To avoid such scenario a common uplink/downlink configuration is used in all mobile networks within this area. Cross-link interference can also be caused if the networks use the same TDD uplink/downlink configuration but the nodes of the networks run out of synchronisation. Cellular networks operating in TDD mode have stringent time synchronisation requirements to avoid uplink transmission in one cell while the neighbouring cell operates in downlink mode and vice versa. This is particularly important for UEs at the cell border. For instance, time error requirements between a Primary Reference Time Clock (PRTC) and end application are specified in Table 1 of International Telecommunication Union, "Time and phase synchronization aspects of telecommunication networks", ITU-T G.8271/Y.1366, 2017. For the level of accuracy class 4, the time error requirement is $\pm$ 1.5 $\mu$s. Lower time error is recommended. In the high frequency range of 26 GHz, even more stringent requirements are used.

In prior-art solutions, the TDD evolved NodeB (eNB - 4G base station) or next generation NodeB (gNB - 5G base station) are shut down if the synchronisation requirements cannot be maintained. Consequently, the service is interrupted during this outage and UEs have to reconnect to other mobile network technologies, if available, or have to be served by remote base stations. The higher distance to these base stations leads to an increase of the interference in the network and deteriorates the performance.

In detail, if the connection of the base station to the external master clock breaks, time synchronisation tasks are taken over by an internal oscillator. The accuracy of the synchronisation can be maintained for a limited time, typically in the range of 12 hours. If the connection to the master clock cannot be re-established or a connection to another clock cannot be established within this period, an automatic shut-down process of the base station is initiated to avoid interference to and from adjacent cells.

With respect to decisions based on channel quality, 3GPP introduced separate Channel State Information (CSI) measurements as a feature for enhanced Interference Mitigation and Traffic Adaptation (eIMTA) that allows the eNB to instruct the UE to perform two separate downlink measurements in two subsets of TTIs. The eNB also can distinguish between uplink channel measurements taken during fixed or flexible TTIs for obtaining more reliable CSI information for the different subsets of TTIs.

The objective of the presented invention is to provide a method of handling a degradation of synchronicity between base stations of a mobile cellular system which enables the mobile communication system and in particular the concerned base stations to continue their service also after a failure of the link to the external synchronisation clock occurs.

The objective is solved by a method according to the features of claim 1. Preferred aspects of the invention are subject-matter of the dependent claims.

According to the invention it is suggested that in case a link failure of the synchronisation link of a considered base station and/or a degradation of synchronicity of the internal time reference of the considered base station to any other base station, in particular to at least one adjacent base station, is detected a TDD mode operation of the considered base station is maintained. In order to handle the increasing interference effects which are caused due to the degradation of the synchronicity of the considered base station at least one certain measure is executed in order to minimize these interference effects.

The fundamental idea of the present invention is the execution of targeted out-of-synchronisation measures to mitigate cross-link interference of a certain base station on surrounding cells in case of degradation of synchronicity or after loss of the connection to an external master clock instead of executing a hard shut-down. In the following the certain base station which is monitored for synchronisation deviation or a link failure and for which certain out-of-synchronisation measures are triggered is called the considered base station.

The following description uses the generic term "base station" for eNB and gNB. This invention focuses on TDD systems of the fourth, fifth, or higher generations of the 3GPP standard, but is not limited to these technologies. Parts of these methods can also be applied in Frequency Division Duplex (FDD) systems.

The out-of-synchronisation measures and the extent at which they are executed in the considered base station depend on the degree of synchronisation deviation from adjacent base stations, which can either be measured and/or predicted from the elapsed time after a loss of the synchronisation link is detected in the considered base station.

According to a preferred aspect of the invention the step of determining the degradation of synchronicity of the considered base station includes calculating a time difference between the internal time reference of the considered base station and the internal time reference of at least one adjacent base station. Outliers of said calculation could be smoothened by applying a filtering operation on the calculation result.

For measuring the time error between two base stations a comparison between both internal time references has to be performed. For this purpose, either measurements of the clock signals or measurements of the air interface frame structure shall be used, or both. The actual clock signal of at least one adjacent base station could be derived from a System Frame Number (SFN) which is broadcasted by the base stations. Usually, every day at midnight a reset of the SFN to zero is done at 00:00:00 Universal Time Coordinated (UTC). The UTC used in the adjacent base station shall be calculated from its SFN. The time error, i.e. the time difference between the considered and the adjacent base station shall then be calculated.

Alternatively or additionally the time difference could be derived from the air interface frame structure used by the considered base station and any of the adjacent base stations. In TDD mode specific TDD patterns including Uplink (U), Downlink (D) and Switching (S) slots are used for transmission. Each slot consists of a specific format of D-, U-symbols. Adjacent base stations are usually configured to use the same TDD patterns and slot formats. Therefore, based on the periodicity of the D slots and symbols and U slots and symbols for the known TDD configuration, the time of arrival of signals transmitted in downlink direction from adjacent base stations and corrected by the signal propagation times shall be compared with the periodicity of the D slots and symbols and U slots and symbols in the considered base station. The resulting time difference indicates a deviation of the internal time reference used by the considered and the adjacent base station.

Signal propagation times from the surrounding base stations shall be considered and the time of the received downlink signals from the surrounding base stations shall be corrected by the corresponding signal propagation time. For this purpose, the measured propagation times from the surrounding base stations shall be stored in each base station. These propagation times shall be stored in combination with an identifier, for instance with the Physical Cell Identifier (PCI) and marked as reference values during a period in which synchronisation between these base stations is provided. In case of relocation of a base station, the new propagation time for signals emitted from the adjacent base station shall be measured and overwrite the previous value.

A preceding condition for the calculation of said time difference is that the considered base station is able to identify received signals as signals transmitted by adjacent base station in downlink direction. In not synchronised TDD networks e.g. with a time-shift of half of a symbol duration it is difficult to identify whether the received signals have been emitted by the adjacent base station or a UE in the radio range of the considered base station. Further, in TDD systems the same frequencies are used but downlink and uplink are separated in the time domain. For resynchronising on adjacent base stations it is suggested to analyse the time of arrival of the received downlink signal because the distance between base stations, i.e. the considered base station and its adjacent base stations is known from radio network planning and the signal propagation times can be calculated. It is also possible to analyze a demodulation reference signal included in the received signals and/or by decoding a Mobile Network Code included in the received signal.

Preferably, the accuracy of the synchronisation signal, i.e. the time difference shall be continuously monitored. The considered base station shall do measurements in idle periods. According to a particular advantageous aspect of the invention a self-healing procedure shall be applied if the time difference between the considered base station and the base line of downlink signals from surrounding base stations exceeds a predefined threshold. If the time difference between the time reference of the considered base station and surrounding base stations exceeds said predefined threshold the time reference of the adjacent base station shall be used in the considered base station, i.e. a resynchronising procedure according to the time reference of the adjacent base station shall be executed. For this purpose, the time differences to more than one adjacent base station shall continuously be calculated for being able to identify whether missing synchronisation exists area-wide or locally for the considered base station. In the first case, various time difference values are measured between the tuples of base stations, whereas in the latter case the measured time difference values are in the same range. Additionally, a base station that has lost the link to the external clock shall report this event to the neighbouring base stations. This information allows a fast identification of an area-wide failure of external synchronisation and a clear identification whether the considered base station or the adjacent base station ran out of synchronisation.

The aim of the resynchronisation procedure is to bring a not synchronised base station back to a time reference that fulfils the synchronisation requirements of the network.

For each out-of-synchronisation measure individual trigger thresholds could be defined. According to an advantageous aspect of the invention the out-of-synchronisation measures and their individual trigger thresholds are defined in a two-dimensional matrix and shall be executed as multi-step procedures. For instance, several thresholds j shall be defined depending on the calculated time difference. An out-of-synchronisation measure i shall be triggered if the synchronisation deviation assigned to this measure i exceeds the corresponding threshold j of a two dimensional matrix with i rows and j columns.

If the same threshold value j is defined for several measures i these measures will be triggered at the same time. Thus several measures can be combined. The index j of each matrix entry allows defining different gradations of synchronisation inaccuracy of the network, it also allows defining hard steps. A hard step is for example the loss of the connection to an external master clock for synchronisation of the base stations in the network. For instance, a failure of the synchronisation link is monitored in today's mobile networks via Operation and Maintenance (O&M). This monitoring task shall be enhanced and a flag "out-of-synchronisation" shall be set. In addition a timer shall be started. A reset of this timer and the flag shall be done once the link to the external synchronisation clock is re-established and the external synchronisation signal is available again. As long as the out-of-synchronisation flag is zero, the thresholds j refer to the measured deviations of the synchronisation accuracy. If this flag is set to one, i.e. during synchronisation via the internal oscillator, the index j refers to the elapsed time from loss of external synchronisation. Alternatively, a matrix with elements i, j, k can be defined, in which the index i defines the measure, j the measured deviation of the synchronisation accuracy and k the elapsed time after loss of external synchronisation. An example for the definition of k is the value 60, i.e. related measures are triggered if the timer reaches 60 minutes.

As at least one advantageous out-of-synchronisation measure it is suggested to reduce the transmission power in uplink and/or downlink direction to and from the considered base station. Limiting and reducing the transmission power in downlink direction can be carried out by defining at least one offset value by which the dynamically determined downlink transmission power is reduced or limited. Preferable several offset values are defined each triggered by individually associated thresholds for the time difference and/or elapsed time.

The individual thresholds can be set in dependence of the traffic load.

Out-of-synchronisation based power reduction in uplink shall preferentially be done by a step-wise reduction of the path loss compensation factor $\alpha$ for fractional power control. This measure aims at reducing the impact from UEs at the cell border that cause highest cross-link interference. A more uniform uplink power reduction is achieved by reducing the broadcast parameter $P_{max}$ used by the UE for calculating the uplink transmission power and/or the set-point $P_0$. A modification of the latter one may be achieved by defining an offset value to be subtracted from the initial value $P_0$. The term "initial value $P_0$" refers to the $P_0$ setting before execution of the out-of-synchronisation measure.

The above suggested possibilities allow keeping the existing 3GPP uplink power control algorithm and the only enhancement is the modification of the mentioned parameters. All of the mentioned parameters are broadcast parameters and can be changed in a simple way for all UEs in the cell. The amount of power reduction to be achieved depends on the time difference (synchronicity degradation) and/or on the elapsed time after external synchronisation is lost.

Adaptive Transmission Bandwidth (ATB) is based on Power Headroom Reports (PHR) (s. 3GPP TS 36.213 and 3GPP TS 38.213) and sets the number of allocated RBs according to available uplink power and cell load. It is an advantage if in case of an active out-of-synchronisation measure for transmission power reduction an increase of the bandwidth assigned to a specific UE by ATB is avoided when the PHR indicates that the UE has still some transmission power reserve. It should be avoided that Radio Resource Management assigns more resources to this UE in uplink direction and that the UE uses more transmission power due to the increased bandwidth M. Therefore, according to a preferred aspect of the invention an increase of the uplink resources based on positive PHR should be actively suppressed by transferring the information about out-of-synchronisation measure (i) to ATB.

According to a further preferred aspect of the invention it is suggested to deactivate closed-loop components for uplink and/or downlink power control while out-of-synchronisation power reduction measures are applied. Deactivation of the closed-loop components could be easily achieved by simply overwriting power increase commands exchanged between the base station and UE with a zero or negative value, thereby suppressing an increase in transmission power.

As a further out-of-synchronisation measure it is suggested to transfer said out-of-synchronisation information, i.e. detection of a degradation of synchronicity and/or loss of link to external clock together with the time difference and/or elapsed time to a beamforming and/or MIMO control unit. The units preferably take the received information into consideration for beamforming and/or MIMO decisions. In particular, a further concentration of the energy on a smaller angle is interdicted as long as out-of-synchronisation power reduction measures are executed. As an example beamforming could be limited to a certain minimum angle. Also a restriction to a maximum number of beams per sector is possible.

Apart from cross-link and co-channel interference also adjacent channel interference has to be considered in mobile networks. Real transmit and receive filters do not have vertical slopes at the edges of the frequency band, i.e. adjacent channels are also affected by spurious emission. To cover also this aspect the present invention proposes dynamic bandwidth reduction or limitation as at least one out-of-synchronisation measure. In particular the bandwidth for resource allocation on the air interface of the considered base station should be reduced from the border of the occupied spectrum towards its centre frequency. Such reduction or limitation is achieved by excluding one or more Resource Blocks (RB) on the border of the frequency spectrum from resource assignment. The number of excluded RBs depends on the absolute level of synchronisation deviation (i.e. the calculated time difference) or the elapsed time since disconnection from the external master clock.

According to an advantageous aspect of the invention a dynamic adaptation of the TDD pattern used by the considered base station for data transmission to and from at least one UE in TDD mode is suggested as at least one out-of-synchronisation measure. The TDD pattern is defined by a TDD downlink/uplink configuration which describes a certain slot sequence of Downlink (D) slots, Uplink (U) slots and Switching point (S) slots. Each slot includes a certain number of symbols for data transmission, namely D, U and F-symbols. Symbol types and their timely order are defined for each slot by a TDD uplink/downlink format. A dynamic switch of the TDD pattern utilized by the considered base station is preferably carried out cluster-wide.

In particular, such switch of TDD pattern may include a modification of D-S-U slot sequence as an out-of-synchronisation measure. As a preferred aspect of the invention it is possible to replace one or several D slots by at least one additional S slot. In particular those D slots should be replaced which are timely arranged before an S slot. It is also possible to replace one or several U slots by S slots following an S slot. Thereby, it is possible to reduce cross-link interference in a network of violated synchronisation requirements.

Additionally, it is also possible to adapt the TDD uplink/downlink format used within each slot. Such format defines the symbols of each slot. By modification of the TDD uplink/downlink format a reduction of resource assignment and interdiction of transmission on symbol basis is achieved. According to a preferred aspect it is suggested to interdict data transmission on respective D, U or F symbols of the utilized TDD uplink/downlink format. Interdiction of data transmission on symbol basis does not necessarily include a complete suppression of data transmission on a selected symbol but also includes a case that data is transmitted, however, the transmission power of the symbol is substantially reduced.

At least one of the following scenarios is conceivable for interdiction of data transmission:

- Interdiction of transmission on the last D symbol before an F symbol.
- Interdiction of transmission on the F symbol.
- Interdiction of transmission on the first U symbol after the F symbol.
- Interdiction of transmission on the last U symbol before the D symbol.
- Interdiction of transmission on the first D symbol after the last U symbol.

Basically, it is possible to define further TDD patterns, i.e. TDD configurations and/or TDD formats with guard symbols or F symbols between U symbols and D symbols for interference reduction on adjacent cells in case of missing synchronicity accuracy.

As a further out-of-synchronisation measure it is suggested to transfer the out-of-synchronisation information (indication of a degradation of synchronicity and/or link failure together with the time difference and/or elapsed time) to an Adaptive Modulation and Coding control unit of the base station. Thereby, it is possible to steer and influence the utilised modulation and coding schemes used by the considered base station and/or connected UEs for data transmission. In case of a degradation of synchronicity or a link failure the modulation and coding scheme should be switched to a more robust scheme. This could be easily implemented by an additional offset value determined by the time difference or elapsed time which is subtracted from the current MCS index, so that a switch of the used scheme is automatically executed.

According to a further preferred aspect of the invention the success of the currently performed out-of-synchronisation measure(s) is/are continuously monitored. The monitoring may include measuring and evaluating at least one of the following parameters for the considered base station: interference, throughput, connection establishment success rate, drop rate and utilisation of modulation and coding schemes. Additionally, a closed loop control may be implemented modifying the individual thresholds depending on the result of said analysis so that the whole method is self-trained. Particular preferred is the implementation of artificial intelligence for training and optimisation of the used thresholds/threshold matrix.

The objective of the application is also solved by a mobile cellular network consisting of a number of base stations configured for data transmission in Time Division Duplex mode with at least one UE. At least one base station includes a controller programmed to carry out the method according to the invention. Alternatively, at least one additional network unit may be incorporated into the network. Such additional unit may comprise a dedicated communication interface for communication and control of at least one base station of the network. The network unit is programmed to communicate and control at least one base station in the network so that the base station is forced to execute at least one of the out-of-synchronisation measures as proposed by the invention.

Further advantages of the invention are now explained on the basis of a preferred embodiment of the invention as shown in the drawings. The figures show:

Figure 1:   a typical deployment scenario of a mobile cellular network consisting of a base station connected to an external clock via the transport network,

Figure 2:   a table with different 4G TDD uplink-downlink configurations as defined in 3GPP TS 36.211,

Figure 3:   an excerpt of Table 11.1.1-1 of 3GPP TS 38.213 covering TDD formats,

Figure 4:   format 28 according to Figure 3 for a non-synchronised cell transmitting half a symbol duration after the synchronised adjacent cell,

Figure 5:   format 28 for a non-synchronised cell transmitting half a symbol duration before the synchronised adjacent cell,

Figure 6:   a TDD pattern switch from format 28 to format 29,

Figure 7:   a further example of a TDD pattern switch from format 28 to a new format 44,

Figure 8:   a block diagram of a base station showing the integration and the interworking of the new methods and their characteristics with the existing radio resource management techniques of prior-art base station,

Figure 9:   another block diagram for showing essential components of the inventive method and

Figure 10:   a flow chart of the described inventive method steps.

A typical deployment scenario for a mobile communication network includes a base station which is connected via optic fibre or radio link (e.g. via microwave) to a router of the transport network. This router has a direct link to the Primary Reference Time Clock (PRTC). Thus, the synchronisation signal and the absolute time are available and can be transferred from the PRTC to the connected base stations. However, during regular operation of the mobile cellular network degradation of the accuracy of time synchronisation or even a loss of external synchronisation can occur for the following reasons:

• **Loss of external synchronisation:** The connection between the base station and router with the PRTC is interrupted, e.g. due to failure of the microwave equipment or a break of the fibre-optic cable. This failure is monitored via O&M systems. In prior-art technologies, a transition to a so-called hold-over mode is done by the base station followed by a shut-down after expiry of a timer.

• **Degradation of the synchronisation accuracy:** In case of Global Navigation Satellite System (GNSS) spoofing, disturbing signals are emitted that imitate the GNSS signal. Consequently, a wrong synchronisation signal is provided. A failure of the connection to the external clock is not identified, because the connection is still active and the base station has no information that the used synchronisation signal is inaccurate. The presented invention proposes for this case measurements of downlink signals from surrounding base stations and resynchronising on the time meter of these surrounding base stations instead of switching to the hold-over mode. This resynchronising process is termed in the presented invention "self-healing time synchronisation procedure".

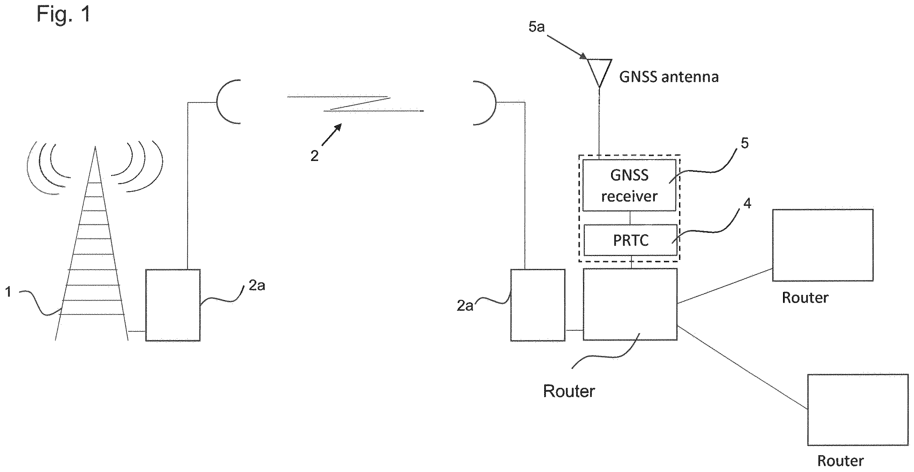

Figure 1 shows an example for a base station 1 synchronised via the PRTC 4, also termed external master clock. The base station 1 is connected via a radio link interface 2a, e.g. realised via microwave transmission 2, to a router in the transport network. Time synchronisation is provided via the PRTC 4 that is connected to a GNSS receiver 5 and its antenna 5a, including the Global Positioning System (GPS) or Galileo, or any other satellite based navigation system. In Figure 1 the dashed line around the GNSS receiver 5 and PRTC 4 represent these two units as one functional block. The synchronisation signal is sent from the PRTC 4 via the router to the base station 1. Loss of external synchronisation occurs if for example the microwave connection 2 fails. A degradation of the synchronisation accuracy occurs, e.g. in case of GNSS spoofing with a still active link 2 between the base station 1 and the PRTC 4 but erroneous synchronisation signals.

**Self-healing time synchronisation procedure**

The accuracy of the synchronisation signal shall be continuously monitored. The considered base station shall do measurements in idle periods and compare the time of arrival of signals from neighbouring base stations with the synchronisation time reference used in the own base station. In TDD systems, a time shift or change of the uplink/downlink configuration has to be executed to measure in uplink direction not the signal of the UEs but the signals of the surrounding base stations. Time differences between the received signals from other base stations and the time basis used in the own base station shall be calculated and a filtering process shall be applied to smoothen outliers.

For measuring the time error between two base stations, a comparison between both time references has to be done. For this purpose, either measurements of the clock signals or measurements of the air interface frame structure shall be used, or both.

- **Clock signals:** The System Frame Number (SFN) is broadcast by the base station. Every day at midnight, a reset of the SFN to zero is done at 00:00:00 Universal Time Coordinated (UTC). The UTC used in the remote base station shall be calculated from its SFN. The time error between the considered and the remote base station shall then be calculated.

- **Air interface frame structure:** Based on the periodicity of the D slots and symbols and U slots and symbols for the known TDD configuration, the time of arrival of signals transmitted in downlink direction from adjacent base stations and corrected by the signal propagation times shall be compared with the periodicity of the D slots and symbols and U slots and symbols in the local base station. In this method, determination of the time error between both stations is based on the frame structure of the air interface.

*Differentiation of received uplink signals from downlink signals*

In not synchronised TDD networks e.g. with a time-shift of half of a symbol duration, it is difficult to identify whether the received signals have been emitted by the adjacent base station or UE, especially if Power Control (PC) is used. In TDD systems, the same frequencies are used but downlink and uplink are separated in the time domain. For resynchronising on adjacent base stations, the time of arrival of the downlink signal shall be analysed, because the distance between the base stations is known from radio network planning and the signal propagation times can be calculated.

Downlink and uplink signals can be differentiated by analysing the demodulation reference signals. In downlink direction the Physical Downlink Control Channel (PDCCH) contains the demodulation reference signals in the first symbols. In uplink direction, the demodulation signals are encoded differently. The relevant channels are the Physical Uplink Shared Channel (PUSCH) and Physical Uplink Control Channel (PUCCH). Demodulation signals for the uplink depend on the Physical Cell ID (PCI) and reference number thus the base station can distinguish UEs from up to 30 cells.

Furthermore a separation of downlink signals from base stations of different operators is possible by decoding the Mobile Network Code (MNC) broadcast via System Information Block (SIB) 1 and, in case of base stations from operators in other countries, the Mobile Country Code (MCC).

The self-healing procedure shall be applied if the time difference between the considered base station and the base line of downlink signals from surrounding base stations exceeds the threshold timeDifference. Signal propagation times from the surrounding base stations shall be considered and the time of the received downlink signals from the surrounding base stations shall be corrected by the corresponding signal propagation time. For this purpose, the measured propagation times from the surrounding base stations shall be stored in each base station. These propagation times shall be stored in combination with the PCI and marked as reference values during a period in which synchronisation between these base stations is provided. In case of relocation of a base station, the new propagation time for signals emitted from the adjacent base station shall be measured and overwrite the previous value.

If the difference between the time reference of the considered base station and surrounding base stations exceeds timeDifference, the time reference of the adjacent base station shall be used, i.e. a resynchronising procedure according to the time reference of the adjacent base station shall be executed. For this purpose, the time differences to more than one adjacent base station shall continuously be calculated for being able to identify whether missing synchronisation exists area-wide or locally for the considered base station. In the first case, different timeDifference values are measured between the tuples of base stations, whereas in the latter case the measured timeDifference values are in the same range. Additionally, a base station that has lost the link to the PRTC shall report this event to the neighbouring base stations. This information allows a fast identification of an area-wide failure of external synchronisation and a clear identification whether the considered base station or the adjacent base station ran out of synchronisation.

The aim of the resynchronisation procedure is to bring a not synchronised base station back to a time reference that fulfils the synchronisation requirements of the network.

**Definition of the decision matrix**

Several thresholds j shall be defined depending on the filter output. A measure i shall be triggered if the synchronisation deviation assigned to this measure i exceeds the corresponding threshold j, shown in equation (1).

$$\underline{THR} = \begin{pmatrix} THR_{11} & THR_{12} & \cdots & THR_{1j} \\ THR_{21} & THR_{22} & \cdots & THR_{2j} \\ \vdots & \vdots & \ddots & \vdots \\ THR_{i1} & THR_{i2} & \cdots & THR_{ij} \end{pmatrix} \qquad (1)$$

If the same value j is defined for several measures i, these measures will be triggered at the same time. Thus several measures can be combined.

The index j allows defining different gradations of synchronisation inaccuracy of the network, it also allows defining hard steps. A hard step is for example the loss of the connection to an external master clock for synchronisation of the base stations in the network. In state-of-the-art technologies, synchronisation of the network entity is tried to be maintained via a base station internal oscillator, however its accuracy decreases with progressive time. The generic approach in equation (1) for triggering measures allows defining a further set of thresholds j for the case that the link to the external synchronisation clock is interrupted. Failure of the synchronisation link is monitored in today's mobile networks via Operation and Maintenance (O&M). This monitoring task shall be enhanced and a flag "out-of-synchronisation" shall be set. In addition a timer shall be started. A reset of this timer and the flag shall be done once the link to the external synchronisation clock is re-established and the external synchronisation signal is available again. As long as the out-of-synchronisation flag is zero, the thresholds j refer to the measured deviations of the synchronisation accuracy.

If this flag is set to one, i.e. during synchronisation via the internal oscillator, the index j refers to the elapsed time from loss of external synchronisation. Alternatively, a matrix with elements i, j, k can be defined, in which the index i defines the measure, j the measured deviation of the synchronisation accuracy and k the elapsed time after loss of external synchronisation. An example for the definition of k is the value 60, i.e. related measures are triggered if the timer reaches 60 minutes.

*Predictions about impending loss of external synchronisation*

The methods described in the presented invention shall also be done as preventive measures before detection of the loss of the connection to the external master clock. Predictions of an approaching link failure shall be based on analyses of the patterns of packet loss and jitter on the entire path of the transport network.

The following sections describe the measures i that are triggered based on the thresholds defined in equation (1). All defined measures have the scope to reduce the impact of missing time synchronisation on other cells as well as to reduce the impact from other cells on the considered non-synchronised cell.

**Measure (i): Transmission power reduction**

Transmission power can be controlled by software, e.g. by increasing the software attenuation of the transmitter or by changing the Power Control (PC) parameters. In downlink direction, the available carrier transmission power for the cell can be fairly distributed among the allocated RBs, or a power adjustment e.g. according to Path Loss (PL) can be applied.

Especially for the uplink, PC is a means to effectively reduce interference in the network and to improve the cell edge performance. This is of particular importance considering the fact that typical 4G/5G deployments have a frequency reuse 1. The uplink PC algorithms specified in 3GPP TS 36.213, "Technical Specification Group Radio Access Network; Evolved Universal Terrestrial Radio Access (E-UTRA); Physical layer procedures (Release 15)", 2019, http://www.3gpp.org for 4G and 3GPP TS 38.213, "Technical Specification Group Radio Access Network; NR; Physical layer procedures for control (Release 15)", 2019, http://www.3gpp.org for 5G are based on a combination of an Open-Loop (OL) and Closed-Loop (CL) scheme. In 4G the UE controls its output power such that the power per RB is kept constant irrespective of the allocated transmission bandwidth. As long as there is no PC command received from the base station on the PDCCH, the UE exclusively performs Open-Loop Power Control (OLPC) based on Path Loss (PL) estimates, broadcast system parameters and dedicated signalling. Whenever the UE receives a Closed-Loop Power Control (CLPC) command from the base station via the PDCCH, the UE has to correct its transmission power if necessary.

The principles of the uplink PC algorithms for 4G, 5G as specified in the cited 3GPP standards are similar. In the following a generic approach is used to describe the principles. In general, the transmission power for the PUSCH is set by the UE according to:

$$P = \min\{P_{max}, 10 \cdot \log_{10}M + P_0 + \alpha \cdot PL + \Delta_{TF} + \Delta_i\} \tag{2}$$

- $P_{max}$ is the maximum allowed UE transmission power specified at 23 dBm (200 mW) for UE power class 3 (3GPP TS 36.101, "Technical Specification Group Radio Access Network; Evolved Universal Terrestrial Radio Access (E-UTRA); User Equipment (UE) radio transmission and reception (Release 15)", 2019, http://www.3gpp.org). $P_{max}$ is a broadcasted parameter that can also be configured to a lower value than that defined by the UE power class.
- M is the bandwidth of the PUSCH resource assignment to a specific UE expressed in number of RBs.
- $P_0$ is the set-point comprising a cell specific and UE specific component (s. 3GPP TS 36.213) to define the target receive level.
- $\alpha \in \{0, 0.4, 0.5, 0.6, 0.7, 0.8, 0.9, 1\}$ is a broadcasted cell specific parameter defining the degree of PL compensation for Fractional Power Control (FPC). The idea of classic OLPC schemes in the uplink is that all UEs are received at the base station with the same power spectral density, which is known as full PL compensation. In addition 3GPP introduced the so-called FPC allowing users to operate at a lower receive signal level compared to that based on full PL compensation resulting in less interference generated to neighbouring cells.
- PL is the downlink path loss estimate calculated by the UE.
- $\Delta_{TF}$ is a Transport Format (TF) dependent offset (s. 3GPP TS 36.213) used to consider different SINR requirements for various Modulation and Coding Schemes (MCS).
- $\Delta_i$ represents the power correction value provided by CLPC. Optionally the correction can be either accumulative or absolute (s. 3GPP TS 36.213), which is signalled by the network.

The preferred application of measure (i) in the presented invention is the adaptation of the fractional Path Loss (PL) compensation factor $\alpha$. This parameter is a broadcast parameter and can be changed in a simple way for all UEs in the cell. An example for the modification of the discrete $\alpha$ values for 4G depending on the elapsed time of external synchronisation is shown in Table 1.

*Table 1: Modification of $\alpha$ values for fractional uplink power control depending on the index j for out-of-synchronisation operation.*

| $\alpha$ for j=0 | $\alpha$ for j=1 | $\alpha$ for j=2 | $\alpha$ for j=3 | $\alpha$ for j=4 |
|---|---|---|---|---|
| 1 | 0.9 | 0.8 | 0.7 | 0.6 |
| 0.9 | 0.8 | 0.7 | 0.6 | 0.5 |
| 0.8 | 0.7 | 0.6 | 0.5 | 0.4 |
| 0.7 | 0.6 | 0.5 | 0.4 | 0 |
| 0.6 | 0.5 | 0.4 | 0 | 0 |
| 0.5 | 0.4 | 0 | 0 | 0 |
| 0.4 | 0 | 0 | 0 | 0 |
| 0 | 0 | 0 | 0 | 0 |

The benefit of this solution is that power reduction is done depending on the PL and thus this variant mainly acts on UEs at the cell border. In contrast, this effect is lower for UEs in the vicinity of the base station and typically characterised by a smaller PL. Hence this strategy aims at UEs that cause the highest impact on other cells.

An alternative solution for the execution of measure (i) is the modification of the parameter $P_{max}$. This parameter is also a broadcast parameter and can be modified in a simple manner for all UEs in the cell. In this way, the existing 3GPP uplink PC algorithm can be used and combined with the out-of-synchronisation measure proposed in this invention. The new introduced parameter array ulPcPmaxRed$_{1j}$ specifies the power reduction from the previous $P_{max}$ setting, e.g. ulPcPmaxRed$_{11}$ = 2 dB for j = 1 and, ulPcPmaxRed$_{12}$ = 4 dB for j = 2. The new $P_{max}$ values to be broadcast after execution of measure (i) are 21 dBm for j = 1 and 19 dBm for j = 2 assuming an initial $P_{max}$ setting of 23 dBm for UEs of power class 3.

A further solution is the adaptation of the set-point $P_0$. In this case a new parameter array shall be introduced uIPcP0Offset$_{1j}$ that defines the offset to be subtracted from the initial value $P_0$. The term "initial value $P_0$" refers to the $P_0$ setting before execution of measure (i). Also this implementation allows keeping the existing 3GPP uplink PC algorithm and the only enhancement is the modification of the $P_0$ value. An example is the definition of the value 2 dB for uIPcP0Offset$_{i1}$ for j = 1 that leads for an initial definition of $P_0$ = -70 dBm in the considered cell to the new set-point $P_0$ = -72 dBm after loss of the link to the external synchronisation clock defined as j = 1. Consequently, the UEs use a lower uplink transmission power.

A possible but not preferred implementation for measure (i) is the modification of the transport format $\Delta_{TF}$. This parameter takes into account the different SINR requirements for various MCS and shall not be linked to out-of-synchronisation measures.

In downlink direction the maximum transmission power shall be limited to a maximum value that is lower than that used in a synchronised network and an offset shall be defined that is subtracted from the power calculated by downlink power control. Several offsets shall be defined for different measures i and their execution shall be triggered depending on the values j defined in the decision matrix in equation (1).

**Deactivation of the closed-loop component for power control**

An important aspect for out-of-synchronisation measures is the deactivation of the CL components in the PC algorithms. Uplink power control in 4G and 5G networks supports an optional closed-loop component around an open-loop point of operation. The method by which the closed-loop correction values $\Delta_i$ are generated is not standardized. For instance, the correction values $\Delta_i$ are determined by comparing the filtered Received Signal Strength Indicator (RSSI) as indicator of the received level and SINR measurements as indicator of the received quality with configurable thresholds representing a two-dimensional decision matrix. In case of power reduction as out-of-synchronisation measure, the receive level or quality can fall below these thresholds. Sending power increase commands would contradict the aim of this invention to reduce interference in other cells if the synchronisation requirements are not fulfilled. A solution is provided by restricting closed-loop PC to send or use only closed-loop power correction values equal or lower than zero, e.g. {-1 dB; 0 dB} for PUSCH. To achieve this behaviour, the uplink PC algorithm shall be enhanced: If any of the measures (i) is triggered, any positive power correction value as outcome of the closed-loop PC component shall be overwritten by the value zero, i.e. $\Delta_i$ = 0 dB. An alternative solution is the deactivation of the closed-loop component in the uplink PC algorithm for all cells covered by the considered base station.

Also in downlink direction, any kind of closed-loop power correction in which the feedback information from the receiver requests power increase to meet the defined targets, shall be suspended, while power reduction related out-of-synchronisation measures are active.

*Impact on other Radio Resource Management procedures*

**Adaptive Transmission Bandwidth (ATB)** is based on Power Headroom Reports (PHR) and sets the number of allocated RBs according to available uplink power and cell load. In case of application of out-of-synchronisation measures, an increase of the bandwidth assigned to a specific UE by ATB shall not be applied when the PHR indicates that the UE has still some transmission power reserve. This measure avoids that RRM assigns more resources to this UE in uplink direction and that the UE uses more transmission power according to equation (2) due to the increased bandwidth M. These algorithms are controlled by the base station, i.e. out-of-synchronisation measures as well as ATB and uplink PC. The new requirement raised by this invention is to suppress an increase of the uplink resources based on positive PHR by transferring the information about out-of-synchronisation measure (i) to ATB.

However, if the UE runs out of power and its PHR includes a negative value, e.g. -3 dB, RRM shall reduce the uplink resource allocation, as this is done in state-of-the-art systems. A modification of existing RRM techniques for negative PHR values is not necessary.

**Measure (ii): Limitation of beamforming**

Beamforming is used to direct the radio energy towards a specific receiver and is an important aspect in 4G and 5G networks. With this technique phase and amplitude of transmitted signals can be adjusted and constructive addition of the corresponding signals at the receiver allows to increase the receive level and quality.

Concentrating the radiated energy in a small angle increases the effective range of the transmitted signal. To avoid interference on other cells in case of missing external synchronisation, the requirement of the presented invention is to send the out-of-synchronisation flag to the beamforming control unit. Furthermore the out-of-synchronisation level shall be reported to the beam forming control unit. The level depends on the expired time after loss of the link to the external synchronisation clock. In a preferred implementation, the level corresponds to the index j described in equation (1).

The beamforming algorithms shall consider the out-of-synchronisation flag. While the out-of-synchronisation flag is active, i.e. value 1, concentration of the energy shall be limited, i.e. the angle of the beams shall be limited to a specific value that must be higher than a certain minimum angle or the number of beams per sector shall not be higher than a specific maximum value. The maximum number of beams per sector or the minimum beam angle depends on the signalled out-of-synchronisation level and the applied power.

**Linking of the out-of-synchronisation flag and level with MIMO techniques**

Multiple Input Multiple Output (MIMO) can be used in uplink and downlink direction to increase the throughput. It is based on the following principle: For sufficiently high radio channel conditions, reception of multiple streams of data (layers) with reduced power per stream is better than a single stream using full power. Its gain decreases if the streams interfere with each other. With an increasing number of users, the signal quality deteriorates due to the mutual interference between the users. The capacity of the network is typically higher for a higher number of MIMO layers, up to a point at which power sharing and interference between users result in declining gains.

The presented invention proposes to consider out-of-synchronisation states in the MIMO algorithms. The new requirement is to send the out-of-synchronisation flag and level to the MIMO control unit. The additional interference caused by a not synchronised base station shall be taken into account for rank decisions, i.e. the number of layers depending on radio channel conditions, and power decisions. The achievable capacity gain from multi-user MIMO depends on receiving each layer with good SINR. The assigned downlink power and thus the SINR for each user depend on the number of simultaneous MIMO users. The SINR does not only depend on the number of users but also on the mutual interference caused by missing synchronisation between cells. As the network capacity typically increases with a higher number of MIMO layers up to a point when power distribution and mutual interference cause losses, the out-of-synchronisation information shall be taken into consideration into the layer decision. Linking of the out-of-synchronisation information by transferring the flag and level to the MIMO control unit and taking this information into consideration for rank decisions is a new requirement raised in this invention.

**Measure (iii): Air interface bandwidth limitation**

In measure (iii) the bandwidth occupied on the air interface shall be reduced. For this purpose, RRM algorithms shall reduce the number of assignable RBs. One RB is the lowest scheduling unit occupying in 4G a bandwidth of 180 kHz and a TTI of 1 ms.

In 5G networks, smaller scheduling intervals can be used. According to their numerology, the 12 sub-carriers have a bandwidth of 180 kHz to 2.88 MHz. 3GPP TS 38.214 specifies the symbol duration depending on the numerology, e.g. 33.33 $\mu$s for uplink direction and 66.67 $\mu$s for downlink direction. Multiples of this minimum number can be allocated.

For each technology, a threshold for the resource block reduction from the upper border and from the lower border shall be introduced. The variables upperRbReduction and lowerRbReduction specify the resource block reduction per TTI in multiples of the technology specific bandwidth of resource block and guard-bands. In any case the bandwidth reduction shall be done from the border of the occupied spectrum towards the centre frequency. In a 4G system operated in a 10 MHz bandwidth with 50 RBs, the values upperRbReduction = 2 and lowerRbReduction = 4 for j = 1 limit resource assignment on each TTI to the range of RB2 to RB45, whereas the primary system with existing connection to the external synchronisation clock uses the full bandwidth and assigns resources to all resource blocks RB0 to RB49. For j = 2 other thresholds can be configured thus various characteristics j can be defined for this measure i = 3 as integrational part of the matrix defined in equation (1).

In downlink direction, resource assignment and scheduling decisions are taken by the base station. In uplink direction the base station informs the UE on the PDCCH about the RBs to be used by the UE for transmitting data in uplink direction on the PUSCH. In 4G the PUCCH is typically assigned on the borders of the uplink spectrum, a higher flexibility is provided in 5G. In case of execution of a bandwidth limitation in 4G, the base station shall define the new position of the RB used in uplink direction for PUCCH and inform the UEs via the PDCCH. In FDD systems, uplink transmission on PUCCH and PUSCH can be continuous in the time domain, while in TDD systems it is discontinuous and only on RBs configured for uplink.

Measure (iii) is a pure software solution and achieved by RRM changes, which can dynamically be configured. This exclusion of RBs on the border of the available spectrum from resource assignment corresponds to an increase of the guard-bands to the adjacent frequency bands. Consequently the adjacent channel interference that depends on the gradient of the filter slopes, decreases.

**Measure (iv): TDD pattern adaptation**

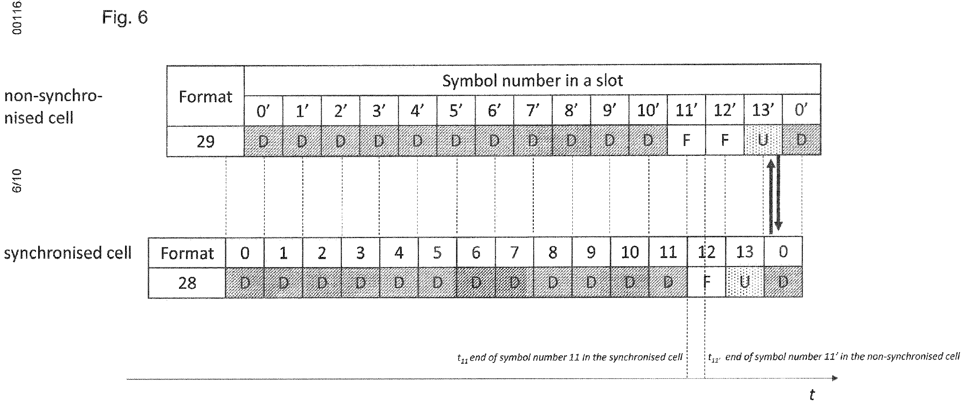

In TDD, a slot is preconfigured for downlink (D), uplink (U), or to be switched from downlink to uplink. 4G supports seven different uplink-downlink configurations, so-called TDD patterns that are described in 3GPP TS 36.211, "Technical Specification Group Radio Access Network; Evolved Universal Terrestrial Radio Access (E-UTRA); Physical channels and modulation (Release 15)", 2019, http://www.3gpp.org. The scheduling TDD configuration is the TDD configuration that is actually used in the cell to indicate, which sub-frames are to be used for uplink and downlink transmissions. The Over-The-Air (OTA) transmitter transient period is the time period during which the transmitter is changing from the transmitter OFF period to the transmitter ON period or vice versa. The transmitter transient period is illustrated in figure 6.4.2.1-1 in 3GPP TS 38.104, "Technical Specification Group Radio Access Network; NR; Base Station (BS) radio transmission and reception (Release 15)", 2019, http://www.3gpp.org and the spurious emissions requirements are described in 3GPP TS 38.104. The 3GPP technical specification also specifies the cell phase synchronization accuracy for TDD, defined as the maximum absolute deviation in frame start timing between any pair of cells on the same frequency that have overlapping coverage areas. The cell phase synchronization accuracy measured at base station antenna connectors shall be better than 3 $\mu$s.

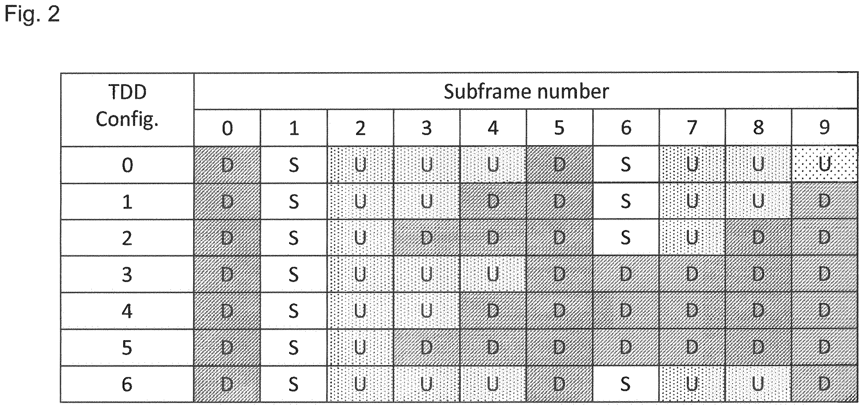

Figure 2 shows the 4G TDD uplink-downlink configurations according to Table 4.2-2 of 3GPP TS 36.211, "Technical Specification Group Radio Access Network; Evolved Universal Terrestrial Radio Access (E-UTRA); Physical channels and modulation (Release 15)", 2019, http://www.3gpp.org. Seven different configurations 0 to 6 are standardised offering a wide range of ratios of TTIs for D and U. S is used for switching from downlink to uplink. There is no S for the transition from U to D, because the UE considers the timing advance and starts transmission accordingly earlier. The axis of the sub-frame number symbolises the progressive time.

In 5G the slots are subdivided into symbols including D, U, and F symbols. The time of arrival of the latest downlink signal depends on the distance between the base station and the UE. The UE is not able to switch immediately from downlink operation to uplink operation. Therefore the TDD uplink/downlink configuration has to be planned in accordance to the cell size.

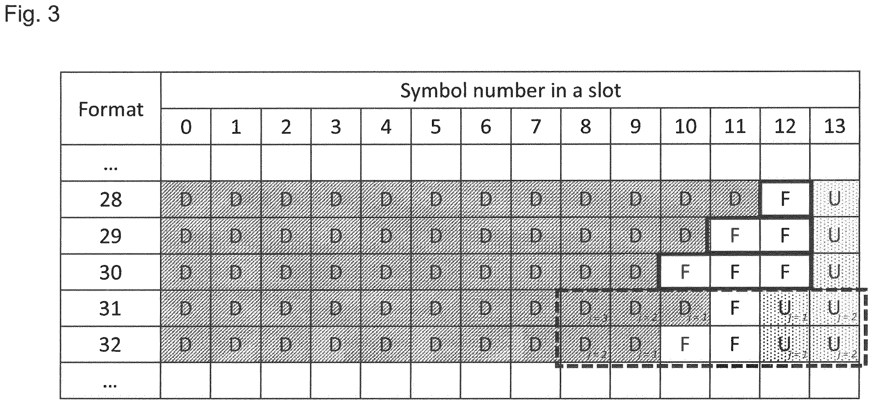

An example for the radio frame structure in 5G is a radio frame of 10 ms duration that is subdivided into ten sub-frames, each of them consisting of two slots. One slot is the smallest RRM scheduling time unit and in this example the slot sequence is defined as DDDSU. This pattern is repeated after five slots, which covers in this example a period of 2.5 ms. Each slot is subdivided into 14 symbols. The 5G TDD uplink/downlink configurations are defined in Table 11.1.1-1 of 3GPP TS 38.213, including 56 defined configurations and further 199 reserved configurations (56 to 254). Figure 3 shows an excerpt of Table 11.1.1-1 covering the TDD formats 28 to 32. The symbol number in a slot ranging from 0 to 13 is shown on the x-axis. Formats 28 to 30 define in symbol number 13 one symbol for uplink transmission. Symbol number 12 is configured as F. While format 28 offers 12 symbols for downlink transmission, format 29 defines an additional F in symbol number 11 instead of D configured in format 28. A third F symbol is defined in format 30 on symbol number 10. Formats 31 and 32 offer a higher U:D ratio by configuring a second U (symbol number 12).

The scope of this invention is to trigger a modification of the slot sequence as well as the TDD uplink/downlink configuration of the symbols within a slot in case that the synchronisation requirements cannot be maintained.

**Change of the slot configuration**

A slot uses a specific TDD uplink/downlink configuration for the 14 symbols of the slot. In the above described example for the slot sequence DDDSU, the D slots shall use 14 D-symbols, corresponding to format 0 in Table 11.1.1-1 of 3GPP TS 38.213. The U slot shall use 14 U-symbols according to format 1. The S slot shall use a configuration consisting of D, F, and U symbols. Further TDD uplink/downlink configurations can be used that include only the symbols D and F or others that include only the symbols F and U, thus a high flexibility is provided.

In one embodiment of this invention, a change of a D slot into an S slot shall be executed to reduce interference from downlink transmission in case of violation of the synchronisation requirements.

- In the example above, the slot sequence shall be changed from DDDSU to DDSSU.

In another example for mitigating the impact of interference from uplink transmission, the considered slot sequence shall be changed to DDSUS. Thus an S slot is used between a U and D slot.

In another embodiment of this invention, specific entire slots shall be restricted from resource assignment, if this is necessary to mitigate interference in the network if the synchronisation requirements are not fulfilled:

- Interdiction of resource assignment on the last D slot before the S slot.
- Interdiction of resource assignment on S slots
- Interdiction of resource assignment on the last U slot before the D slot

Furthermore the sequence of D-S-U slots shall be modified by:

- Replacing of D slots by S slots.
- Replacing of U slots by S slots.

These two measures shall be combined with an adaptation of the uplink/downlink format in the S slots.

These measures shall be done to reduce or even avoid resource assignment on these slots. Interdiction of resource assignment can be done by RRM techniques, i.e. the scheduler does not consider this slot for resource allocation. For uplink direction the scheduler informs the UE by sending uplink grants for specific slots. In case of violation of the synchronisation requirements, resource assignment on slots causing interference shall (a) be interdicted or (b) be reduced by selecting proper uplink/downlink configurations.

**Change of the TDD uplink/downlink configuration within a slot**

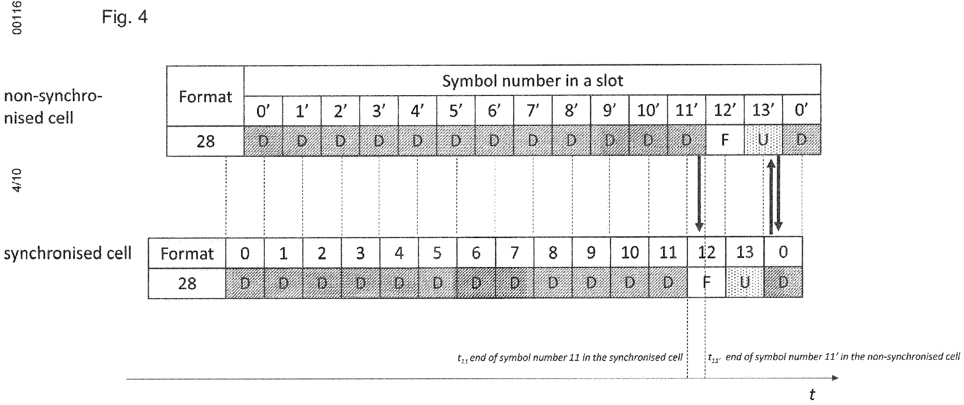

Figure 4 shows the uplink/downlink configuration of format 28 for a synchronised cell on bottom with symbol numbers 0 to 13 and for a non-synchronised cell on top with symbol numbers 0' to 13' on a common time scale. Repetition of the pattern after symbol number 13 (13') in the next slot is indicated by symbol number 0 and 0', respectively, on the right side of symbol numbers 13 and 13'. In this example the non-synchronised cell represents the case that the link to the external synchronisation clock failed. Uplink and downlink transmission is done half a symbol duration after that of the adjacent synchronised cells. Note that a failed connection to an external synchronisation clock impacts all cells served by the considered base station. The term "adjacent synchronised cells" refers to cells of other base stations of the same mobile network, or to cells of other operators that operate in another frequency band.

The end of symbol number 11, configured for downlink transmission, is shown for both cells. Radiation of the D in symbol number 11' of the non-synchronised base station overlaps the transmission time of the subsequent F symbol of the synchronised cell. Higher performance impact is given by the overlap between the U symbol number 13' and the D symbol number 0. Transmission of D symbol already starts in the synchronised cell, while the non-synchronised cell is still in uplink transmission in symbol number 13'. UEs in the non-synchronised cell at the cell border to the synchronised cell suffer from downlink radiation of the synchronised cell and the uplink transmission of these UEs interferes with downlink data transmitted simultaneously in the synchronised cell.

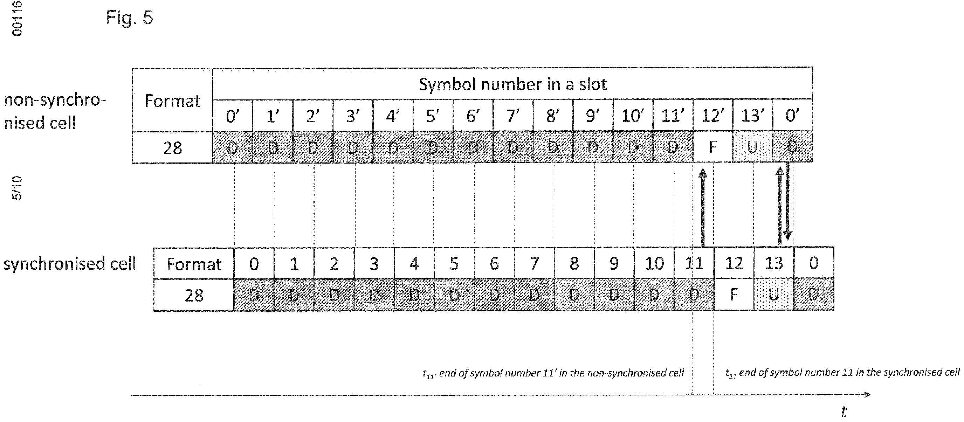

Figure 5 shows the case for the non-synchronised cell transmitting half a symbol duration before the synchronised adjacent cell. Interference is caused by the overlap of U and D symbols on symbol numbers 13, 0', and 0.

This invention proposes the definition of further formats with guard symbols or F symbols between the U and D symbols.

In another embodiment of this invention, resource allocation decisions shall interdict data transmission in slots and symbols that interfere with surrounding cells in case of missing time synchronicity. In format 28, this is the case for symbol number 11, configured as D and symbol number 13, configured as U. The RRM algorithms shall consider the "out-of-synchronisation" flag and level and prevent transmission on symbols around the switching point between D and U with an F symbol between, as well as between the switching point from U to D, which does not include an F symbol between.

- **Interdiction of transmission on the last D symbol before the F symbol:** The information about synchronisation deviations or the missing synchronisation link to the external clock is known by the base station. If synchronisation requirements are not met, data transmission in downlink direction shall not be done on the last D symbol before the switching point to the F symbol. Term definition: Interdiction of data transmission on symbol basis shall include the case that data is transmitted, however, the transmission power is substantially reduced and thus interference.
  For each TDD format defined in Table 11.1.1-1 of 3GPP TS 38.213 the symbol number for interdicted resource assignment as out-of-synchronisation measure shall be defined in a table used for resource allocation. For format 28 it is the symbol number 11 that shall not be used for transmission as long as synchronisation requirements are not fulfilled.
  Depending on the time difference between the considered non-synchronised cell and the adjacent synchronised cell, resource assignment shall be interdicted also for further D symbols before this symbol. In a further embodiment of this invention, the synchronisation offset between the non-synchronised cell and an adjacent cell that is still connected to the external synchronisation clock shall be detected via the base station receiver. The receiver of the out-of-synchronisation base station shall be used to detect downlink signals of the adjacent base station. Under consideration of the signal propagation time that was measured while the considered base station was still connected to the external synchronisation clock, the current time difference between both base stations shall be calculated. Depending on this time difference, transmission shall be prevented on one or several symbols.
  Figure 3 shows in the dashed rectangle an example for the formats 31 and 32. In format 31, symbol number 10 is defined as j = 1. The value 1 of the index j defines the first action of this measure, i.e. preventing transmission on symbol number 10. Symbol number 9 is defined as j = 2. If the time difference between both base stations exceeds a specific threshold, transmission shall be prevented on this symbol. If the time difference exceeds a further threshold, transmission on symbol number 8 that is defined as j = 3 shall also be prevented. The thresholds shall be defined in accordance to the propagation times of electromagnetic waves in this cell that depend on the cell size. An alternative implementation foresees to link the value of the index j on the elapsed time after loss of connection to the external synchronisation clock. Assuming that the accuracy of synchronisation using the internal oscillator decreases with ongoing time, the value 1 shall be assigned to the variable j after detection of a failure of the connection to the external synchronisation clock. Variable j shall be incremented after a predefined time and consequently transmission shall be interdicted on further symbols. This refers to the out-of-synchronisation level. The index j represents integration of the thresholds into the matrix defined in equation (1).

- **Interdiction of transmission on the F symbols:** In order to avoid cross-link interference between synchronised and non-synchronised cells, F symbols shall not be used for transmission as long as the out-of-synchronisation flag is active.

- **Interdiction of transmission on the first U symbol after the F symbol:** In the formats 31 and 32 of Figure 3, the index j of the first U symbol after the last F symbol in this slot is defined according to this invention as 1. This symbol has the number 12. The following U symbol in number 13 is defined by the index j = 2. After detection of missing external synchronisation, the out-of-synchronisation flag and its level sent to the radio resource management unit shall be used to prevent in the first level the first U symbol from transmission in uplink direction. Depending on the out-of-synchronisation level, transmission shall also be prevented on further adjacent symbols. The decision is taken by radio resource management in the base station and the result of this procedure shall be transmitted to the UE.

- **Interdiction of transmission on the last U symbol before the D symbol:** Figure 3 shows the symbol numbers ranging from 0 to 13. Symbol number 0 of the next slot follows after symbol number 13 of the shown slot. Format 31 defines two U symbols. If synchronisation accuracy is degraded or the out-of-synchronisation flag is active after loss of external synchronisation, the last U symbol before the switching point to the D symbol shall be prevented from transmission in uplink direction. Depending on the out-of-synchronisation level, also the last but one or further symbols shall be prevented from transmission. This means that no data shall be sent in this symbol, i.e. no electromagnetic waves shall be emitted or at significantly lower power. The case for preventing more than one uplink symbol is applicable for TDD configurations, in which at least one U symbol remains for uplink transmission. Examples are formats 50 and 51 but not the formats shown in Figure 3.

- **Interdiction of transmission on the first D symbol after the last U symbol:** This situation refers to symbol number 0 of the formats shown in Figure 3. Transmission shall be interdicted on this symbol.

In a generic implementation, the different sub-sets defined in the bullets above shall be executed individually. Hence the matrix defined in equation (1) shall not contain all aspects of this measure (iv) for i = 4, but shall use separate values for the index i, e.g. for the "interdiction of transmission on the last D symbol before the F symbol" and another value i for the "interdiction of transmission on the first D symbol after the last U symbol" and so on. In this generic implementation, individual thresholds j can be assigned to each single measure i.

A further embodiment of this invention foresees the switch in the non-synchronised cell to another of the 55 standardised TDD patterns or to one of the 199 reserved configurations. This measure shall either be combined with the interdiction of transmission on symbols or slots that would cause cross-link interference with remote (synchronised) base stations or the switch to another TDD pattern shall be executed in an entire cluster of base stations. Figure 6 shows the switch from format 28 to format 29. In addition, data transmission on the F symbols shall be limited to a minimum value. Format 29 differs from format 28 by defining symbol number 11 as F in format 29 compared to D in format 28. Consequently interference from the non-synchronised cell on symbol number 11' is minimised. However, on symbol number 13', interference is still generated from uplink transmission in the non-synchronised cell on the D symbol number 0 in the synchronised cell.

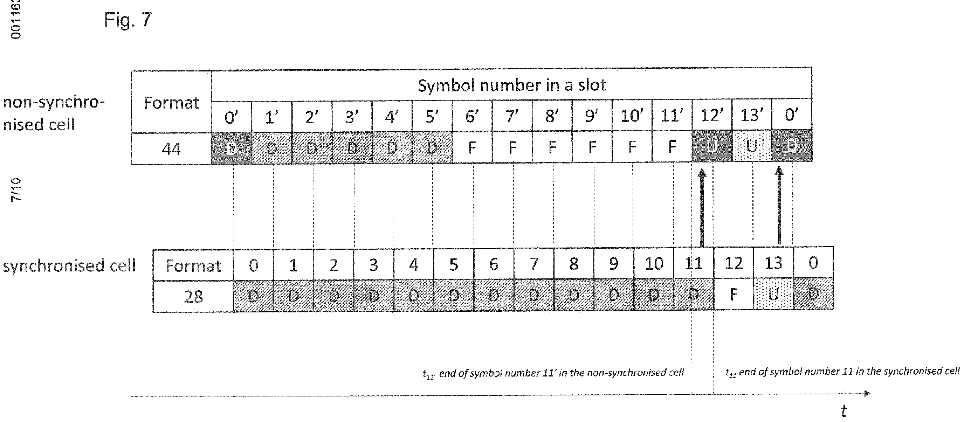

Figure 7 shows for a further embodiment of this invention the switch from format 28 to format 44. The switch shall be executed for the cells that have lost connection to the external clock. The connection is interrupted for the base station and all cells covered by this base station shall execute a switch to a configuration consisting of a higher ratio of F symbols. In Figure 7 the U symbol in symbol number 12' and the D symbol in symbol number 0', highlighted by dark background colour, shall be excluded from transmission. This measure avoids interference from U symbols of the non-synchronised cell on D symbols of the synchronised surrounding cells. It also avoids interference on the uplink traffic on symbol number 12' of the non-synchronised cell caused by downlink traffic on symbol number 11 of the synchronised neighbouring cell.

In a further embodiment of this invention, specific TDD uplink/downlink configurations shall be generated in the reserved formats 56 - 254 that are characterised by F symbols between U and D symbols. Formats 0 to 55 include F symbols in a D-F-U configuration only for the transition from D to U, not for the transition from U to D. Using F symbols for the transition from U to D is beneficial to reduce uplink-downlink interference for the case of non-synchronised neighbouring cells.

**Measure (v): Adaptation of adaptive modulation and coding**

AMC switches between different MCS such as Quadrature Phase-Shift Keying (QPSK), 16 Quadrature Amplitude Modulation (QAM), 64 QAM, 256 QAM, or higher (e.g. 1024 QAM), depending on radio channel conditions. Measure (v) of this invention proposes a forced switch to a more robust modulation and coding scheme, e.g. to use QPSK instead of 16QAM, or 64QAM instead of 256QAM. The higher robustness provides a better forward error correction and hence a lower ratio of retransmissions. On the other hand, less user data can be transmitted for the same gross bit rate.

Adaptive modulation and coding is typically triggered by the radio link quality. This invention proposes that the out-of-synchronisation flag is sent to the RRM module. If this flag is activated (value 1), AMC as part of RRM shall (a) limit the modulation and coding schemes to a maximum value, or (b) steer the modulation and coding scheme calculated by prior-art adaptive modulation and coding algorithms towards a more robust one. The latter implementation can be realised by subtracting a specific offset from the MCS index. If the offset is defined as the value 3, MCS-6 shall be assigned instead of MCS-9.

**Identification of synchronisation divergences**

In another embodiment of this invention, the base station receivers shall be used to monitor the synchronisation to adjacent base stations, which is not limited to base stations of the same Public Land Mobile Network (PLMN). Analysing the time of arrival of D symbols and U symbols from other cells and calculation of the offset to the D symbols and U symbols of the own base station, allows to execute the presented measures if the time difference runs out of a predefined range.

For this embodiment it is essential to analyse, whether the interference is higher on the first U symbol after the change from the F to the U symbol than on the following U symbols. In the same way, it is of special interest, whether the interference on the last D symbol before the switch to an F symbol is higher than on the preceding D symbols. With respect to the switch from uplink to downlink, it is essential, whether interference on the last U symbol before the switch to downlink is higher than on the preceding U symbols and whether the first D symbol is more interfered than the subsequent D symbols. Higher interference on the symbols around the switching points shall be used as indicator for out-of-synchronisation.

A direct method is the measurement of the interference in the own cell. An indirect method is the analysis of the applied modulation and coding schemes in the own cell. This indirect method is less accurate because other effects like the amount of data in the buffer and the definition of an initial MCS have also impact on the applied MCS. Its benefit is mainly related to the downlink, because the receiver of the base station performs measurements only in uplink direction. A low ratio of 256 QAM and 64 QAM is an indication that interference is high, which might be caused by synchronisation deviations between the considered cell and surrounding cells. This aspect shall be used to trigger the measures defined in this invention.

**Combination of the measures and its characteristics with existing procedures**

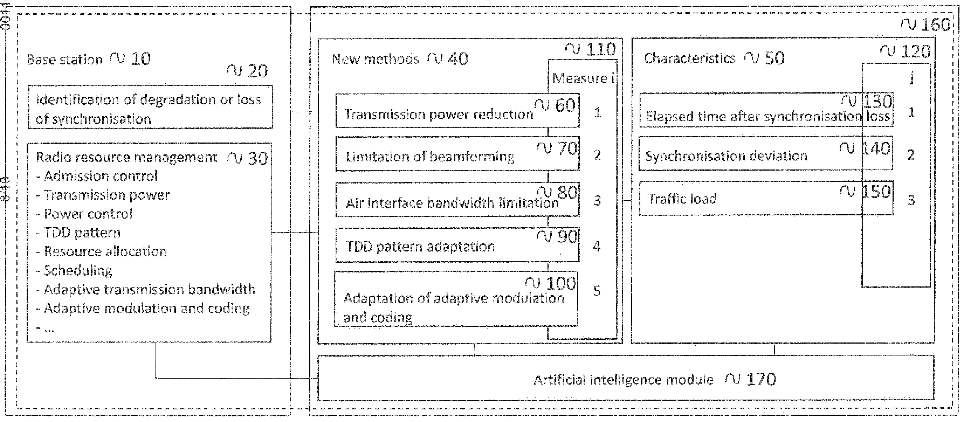

Figure 8 describes the integration and the interworking of the new methods and their characteristics with the existing radio resource management techniques of prior-art base stations. Figure 8 shows on the left side a state-of-the-art base station 10 with a module 20 for the supervision of the connection to the external synchronisation clock, as well as the radio resource management unit 30 comprising admission control, setting of the transmission power, power control, definition of the applied TDD pattern, radio resource allocation, scheduling, adaptive transmission bandwidth, and adaptive modulation and coding.

The new methods 40 and their characteristics 50 proposed in this invention are shown on the right side of Figure 8. The new functions contain the modules "transmission power reduction" 60, "limitation of beamforming" 70, "air interface bandwidth limitation" 80, "TDD pattern adaptation" 90, and "adaptation of adaptive modulation and coding" 100. These methods are defined by the index i as measures 1 to 5. Each measure 110 can be carried out at a different extent, e.g. a moderate power reduction by 3 dB or a higher power reduction by 10 dB. The different extent is triggered via the index j 120, which depends (a) on the elapsed time from loss of external synchronisation 130, (b) the deviation to a synchronised cell 140, or (c) the traffic load 150. The higher the traffic load, the higher the interference and hence the negative performance impact after loss of a common synchronisation base. This aspect is considered in the presented invention by executing the described measures at a higher extent if the traffic load in the network is high. A combination between these characteristics is possible. Each characteristic or combination of characteristics results in a specific value for the index j. Depending on this value j, the related measure i shall be executed at a specific extent. An example for measure 1 "transmission power reduction" is the value 3 dB for j = 1, 10 dB for j = 2, and 20 dB for j = 3. The related thresholds according to equation (1) are $THR_{11}$ = 3 dB, $THR_{12}$ = 10 dB, and $THR_{13}$ = 20 dB. Assuming that only the "elapsed time from synchronisation loss" defines the characteristic j of this measure, j = 1 shall be used in a first period after synchronisation loss, j = 2 shall be used in a second period after synchronisation loss and j = 3 for the subsequent period. The periods can be defined e.g. in terms of hours or minutes. The identification of the loss of the connection to the external synchronisation clock shall call the functions. The functions use different thresholds and the extent at which these measures are executed depends on the characteristics.

The new methods and their characteristics can be operated in separate devices or they can be integrated into the base station, preferably into the radio resource management units of the 4G and 5G base stations. This option is represented by the dashed line 160. The artificial intelligence 170 component is a further module shown in Figure 8 that uses a direct interface to the radio resource management module of the base station. It uses furthermore the connection to other network entities for the evaluation of the interference and performance in other cells, which is not shown in Figure 8.

**Artificial intelligence component**

The success of the applied measures (i) to (v) shall be continuously monitored. Especially the interference, throughput, connection establishment success rate, drop rate, and utilisation of modulation and coding schemes shall be analysed. A closed loop shall be implemented that modifies the specified thresholds $THR_{ij}$ depending on this analysis. If the increase of the interference on neighbouring cells is high, the time interval defined by the component j shall be reduced, i.e. the measures i shall be executed earlier. In a second optimisation loop, the thresholds related to the defined measures i shall be increased, i.e. bandwidth limitation shall be done in larger steps and excluding specific slots from resource allocation and symbols from transmission shall be done more intensively.

In the other direction, if the interference increase in the neighbouring cells is below a specific threshold, the time interval in the component j shall be increased and the measures i shall be done in smaller steps.

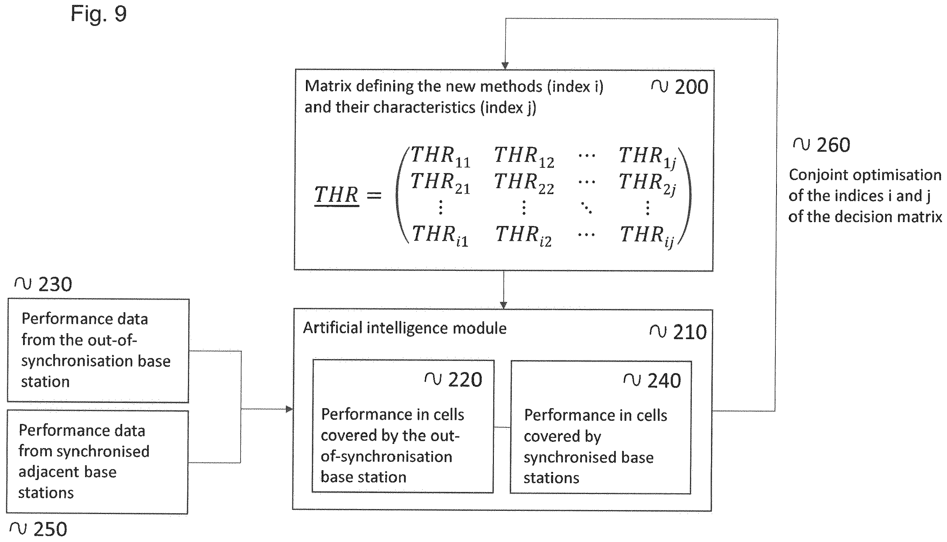

The decision matrix defined in equation (1) is the fundamental component of the presented invention. This matrix is formed by the new methods 40, represented by the index i (110) of the matrix components and their characteristics 50, represented by index j (120) in Figure 8. These components are represented by the matrix 200 in Figure 9. The optimisation loop of the values of the matrix elements via the artificial intelligence module 210 is shown in Figure 9. The current values of the decision matrix are analysed in the artificial intelligence module and combined with performance data of cells covered by the out-of-synchronisation base station 220 that are provided by the considered out-of-synchronisation base station 230, as well as performance data of the surrounding synchronised cells 240 that are sent from the adjacent base stations 250 to the artificial intelligent module. The performance data include but are not limited to interference, data throughput, MCS utilisation and block error rate.

This process results in a conjoint optimisation 260 of the indices i and j of the matrix. It implies the triggering point j of a measure i and the extent of the measure i. In a further embodiment of this invention, also an exchange of measures and integration of new measures shall be done. After modification of any of the components of the matrix, a timer shall be started and any further change shall not be executed before expiry of this timer. After modification of any of the components of the matrix, the performance evaluation shall start without bias from the previous settings used: The previous performance data shall be deleted and a reset of the timer shall be applied. These reset procedures shall also be executed when the connection to the external synchronisation clock is re-established.

**Procedure**

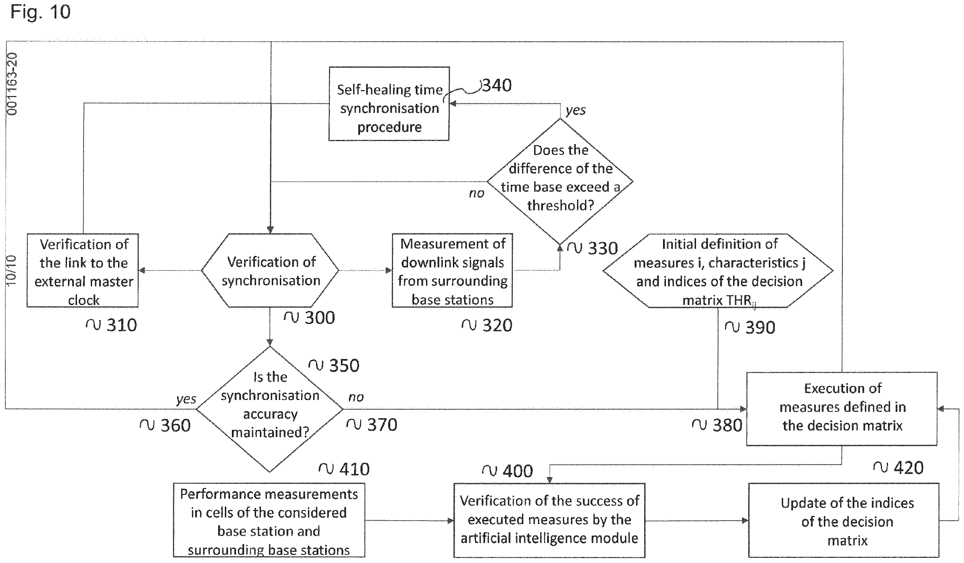

Figure 10 shows a flow chart of the described procedure. The starting point is the continuous loop for the verification of the synchronisation 300 in the considered base station. In this loop it is periodically verified whether the link to the external master clock is still active, 310. In a second loop 320, downlink signals from adjacent base stations shall be measured and the time reference used in adjacent base stations shall be derived from the time of arrival of the downlink signals from adjacent base stations taking into consideration the propagation times of the signals.

In step 330 it is checked whether the corrected and filtered difference between the considered base station and one or several adjacent base stations exceeds a configured threshold. If this is not true, the loop returns to step 300. This loop is executed at irregular intervals with a higher frequency during idle periods, i.e. low traffic situations. If the result of query 330 is true, the self-healing time synchronisation procedure is executed with a resynchronisation on the time reference of one or several adjacent base stations. Also this path ends in the verification of the synchronisation 300 and the loop is consecutively repeated.

Directly linked to the verification of synchronisation in step 300 is the query 350, to check whether the synchronisation requirements are fulfilled. As long as the result of this query is true (360), verification of the synchronisation accuracy 300 is continuously repeated. If the synchronisation requirements are not met, 370, the measures 380 defined in the presented invention and shown in 40 in Figure 8 are executed using the indices defined in the decision matrix 390 in Figure 10. The success of the executed measures is verified in the artificial intelligence module 400 based on performance measurements 410 in the cells of the considered base station, as well as in cells of surrounding base stations. This procedure results in an update of the indices of the decision matrix 420, if appropriate. The new indices shall now be applied in the decision matrix for the execution of the defined measures. The update of the indices in the decision matrix 400 implies a reordering of the measures defined by the index i, adding of new measures or changing the thresholds j that trigger the measures. This loop ends if the synchronisation requirements are again fulfilled, e.g. after re-establishment of the link to the external synchronisation clock.

**Implementation aspects**

The described method can be realised as a stand-alone apparatus connected to a mobile communication network or integrated into the entities of the mobile communication system, preferable into the base station.

- As stand-alone unit, the apparatus consists of a power supply unit, processor, memory, and input/output unit as interface to the local base station, remote base stations, and external performance evaluation entities.
- The preferred implementation for the execution of the methods and the interworking with existing mobile network systems is the integration into the base station and utilisation of parts of the processing power and memory of the base station's hardware.

**Problem to be solved**

If the connection to the external synchronisation clock is lost, in prior-art TDD systems the base station is shut down to prevent adjacent cells from cross-link interference. The solution presented in this invention applies manifold measures to reduce the impact on neighbouring cells, but to maintain the service in the cell in which the base station has an interrupted connection to the external synchronisation clock or suffers from a degradation of the synchronisation accuracy. Each measure is executed at a specific extent that is controlled by thresholds and represented by a two-dimensional matrix for the measures and their characteristics.

**Benefit of the present invention**

TDD networks have stringent synchronisation requirements. If these requirements are not met, prior-art base stations are shut down and the service is lost until the connection to the external synchronisation clock is re-established. The presented invention offers the benefit that the service is still provided in case of loss of external synchronisation, albeit at lower capacity and coverage. Thus the service until re-establishment of the connection to the external synchronisation clock continues and a complete failure is avoided.

Further advantages are provided at the borders between countries. While TDD networks of different network operators in the same country are typically synchronised, a synchronisation beyond borders is not always applied. If the deviation of the synchronisation exceeds a specific threshold, the measures described in this invention shall be executed.

**Claims**

1. A method of handling a degradation of time synchronicity between base stations of a mobile cellular network, in particular supporting the 4G, 5G or any higher mobile communication standard, wherein the base stations perform Time Division Duplex (TDD) mode on a communication link with at least one User Equipment (UE), and wherein an internal time reference is required for control of the transmission time interval of the TDD mode, said internal time reference of the base stations is synchronized with an external synchronisation clock via a synchronisation link, **characterised in**

   **that** in case a link failure of the synchronisation link of a considered base station and/or a degradation of synchronicity of the internal time reference of the considered base station to any other base station, in particular to at least one adjacent base station, is detected, a TDD mode operation of the considered base station is maintained and at least one out-of-synchronisation measure is performed at the considered base station in order to mitigate a possible interference on surrounding cells caused by the degradation of synchronicity or the link failure of the considered base station.

2. The method according to claim 1 **characterised in that** the degradation of synchronicity is predicted on the basis of the elapsed time since a link failure of the synchronisation link has been detected.

3. The method according to claim 1 or 2 **characterised in that** determining the degradation of synchronicity of the considered base station includes calculating a time difference between the internal time reference of the considered base station and the internal time reference of at least one adjacent base station, wherein preferably a filter process is applied to the calculation to smoothen outliers.

4. The method according to claim 3 **characterised in that** the internal time reference of the at least one adjacent base station is determined by receiving a broadcast signal from the at least one adjacent base station wherein such broadcast signal includes a consecutive system frame number which is periodically reset at predefined time point and the internal time reference used by the at least one adjacent base station is determined based on the receiving time of the system frame number at the considered base station and the respective signal propagation time.

5. The method according to claim 3 **characterised in that** the calculation of the time difference includes receiving a downlink signal from the at least one adjacent base station and comparing the air interface frame structure depending on a configured TDD pattern used by the adjacent base station and the considered base station for transmission in downlink direction.

6. The method according to any of claims 4 or 5 **characterised in that** the considered base station determines whether the received signals are uplink signals of surrounding UEs or downlink signals of the at least one adjacent base station by evaluating the receiving time of said signals against a known distance between the adjacent base stations and the considered base station and/or by analyzing the demodulation reference signals of the received signals and/or by decoding a Mobile Network Code included in the received signal.

7. The method according to any of the preceding claims **characterised in that** in case the degradation of synchronicity, in particular the calculated time difference, and/or the elapsed time exceeds a predefined threshold the considered base station synchronizes its internal time reference with the internal time reference of the at least one adjacent base station.

8. The method according to any of the preceding claims **characterised in that** different out-of-synchronisation measures are performed according to a predefined multi-step procedure wherein each out-of-synchronisation measure is triggered when its individually predefined threshold is exceeded by the calculated time difference or the elapsed time.

9. The method according to claim 7 or 8 **characterised in that** the threshold is set in dependence of the traffic load.

10. The method according to any of the preceding claims **characterised in that** at least one out-of-synchronisation measure includes reducing the transmission power of a downlink signal transmitted by the considered base station to at least one UE in TDD mode, in particular reducing the transmission power by an offset value depending on the exceeded threshold, and/or limiting transmission power of an uplink signal transmitted by at least one UE connected to the considered base station in TDD mode, in particular by a preferably step-wise reduction of the fractional Path Loss (PL) compensation factor $\alpha$ and/or reduction of the maximum allowed UE transmission power $P_{max}$ and/or the set-point $P_0$ and/or a modification of the transport format $\Delta$TF, wherein preferably during reduction/limitation of downlink/uplink transmission power positive values in a power headroom report for resource allocation are ignored.

11. The method according to claim 10 **characterised in that** at least one out-of-synchronisation measure includes a deactivation of a closed-loop component for the uplink/downlink transmission power control of the considered base station, for instance by overwriting power increase commands with a zero value.

12. The method according to any of the preceding claims **characterised in that** the at least one out-of-synchronisation measure includes informing a beamforming control unit and/or a MIMO control unit about the degradation of synchronicity/link failure and the time difference/elapsed time wherein the beamforming control limits the transmission beams of the considered base station to beam angles that must be higher than a certain minimum angle and/or restricts the number of beams per sector based on the provided information and/or the MIMO control unit takes into account the provided information for rank decisions for MIMO for the considered base station.

13. The method according to any of the preceding claims **characterised in that** at least one out-of-synchronisation measure includes a limitation and/or reduction of the bandwidth for resource allocation on the air interface of the considered base station, in particular the bandwidth should be reduced from the border of the occupied spectrum towards its center frequency by a reduction of the number of assignable resource blocks.

14. The method according to any of the preceding claims **characterised in that** at least one out-of-synchronisation measure includes a dynamic adaptation of the TDD pattern used by the considered base station for TDD operation, in particular by adapting the D-S-U sequence of the TDD pattern, for instance by replacing an existing D- and/or U-slot by a S-slot and/or restricting specific entire slots from resource assignment, and/or includes a dynamic adaption of the TDD uplink/downlink format of the symbols within at least one slot of the TDD pattern, in particular data transmission is interdicted or transmission power is essentially reduced on at least one symbol before, on or after a switching point between D- and U-symbols and U- and D-symbols.

15. The method according to any of the preceding claims **characterised in that** at least one out-of-synchronisation measure includes an adaptation of adaptive modulation and coding, in particular the measure forces a switch to a more robust modulation and coding scheme, in particular by subtracting a specific offset from the MCS index defining the used scheme.

16. The method according to any of the preceding claims **characterised in that** the success of the performed out-of-synchronisation measures is continuously monitored, in particular at least one of the parameters interference, throughput, connection establishment success rate, drop rate and utilisation of modulation and coding schemes is analysed wherein a closed loop control is implemented modifying the individual thresholds triggering the out-of-synchronicity measures depending on the result of said analysis.

17. A mobile cellular network consisting of a number of base stations configured for transmission in Time Division Duplex mode with at least one UE, **characterised in that** at least one base station is configured to carry out the method according to any one of the preceding claims or the mobile cellular network comprises an additional network unit having a communication interface for communication and control of at least one base station so that the base station carries out the method according to any one of the preceding claims.

EP 3 907 906 A1

Fig. 1

**Fig. 2**

| TDD Config. | Subframe number | | | | | | | | | |
|:---:|:---:|:---:|:---:|:---:|:---:|:---:|:---:|:---:|:---:|:---:|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

EP 3 907 906 A1

## Fig. 3

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| ... | | | | | | | | | | | | | | |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| ... | | | | | | | | | | | | | | |

**Fig. 4**

non-synchro-
nised cell

| Format | Symbol number in a slot | | | | | | | | | | | | | | |
|---|---|---|---|---|---|---|---|---|---|---|---|---|---|---|---|
| 28 | 0' | 1' | 2' | 3' | 4' | 5' | 6' | 7' | 8' | 9' | 10' | 11' | 12' | 13' | 0' |
|  | D | D | D | D | D | D | D | D | D | D | D | D | F | U | D |

synchronised cell

| Format | | | | | | | | | | | | | | | |
|---|---|---|---|---|---|---|---|---|---|---|---|---|---|---|---|
| 28 | 0 | 1 | 2 | 3 | 4 | 5 | 6 | 7 | 8 | 9 | 10 | 11 | 12 | 13 | 0 |
|  | D | D | D | D | D | D | D | D | D | D | D | D | F | U | D |

$t_{11}$ end of symbol number 11 in the synchronised cell

$t_{11'}$ end of symbol number 11' in the non-synchronised cell

$t$

EP 3 907 906 A1

Fig. 5

| non-synchro-nised cell | Format | Symbol number in a slot | | | | | | | | | | | | | | |
|---|---|---|---|---|---|---|---|---|---|---|---|---|---|---|---|---|
| | | 0' | 1' | 2' | 3' | 4' | 5' | 6' | 7' | 8' | 9' | 10' | 11' | 12' | 13' | 0' |
| | 28 | D | D | D | D | D | D | D | D | D | D | D | D | F | U | D |

| synchronised cell | Format | 0 | 1 | 2 | 3 | 4 | 5 | 6 | 7 | 8 | 9 | 10 | 11 | 12 | 13 | 0 |
|---|---|---|---|---|---|---|---|---|---|---|---|---|---|---|---|---|
| | 28 | D | D | D | D | D | D | D | D | D | D | D | D | F | U | D |

$t_{11'}$ end of symbol number 11' in the non-synchronised cell      $t_{11}$ end of symbol number 11 in the synchronised cell

$t$

EP 3 907 906 A1

Fig. 6

non-synchro-nised cell

| Format | Symbol number in a slot | | | | | | | | | | | | | | |
|---|---|---|---|---|---|---|---|---|---|---|---|---|---|---|---|
| | 0′ | 1′ | 2′ | 3′ | 4′ | 5′ | 6′ | 7′ | 8′ | 9′ | 10′ | 11′ | 12′ | 13′ | 0′ |
| 29 | D | D | D | D | D | D | D | D | D | D | D | F | F | U | D |

synchronised cell

| Format | 0 | 1 | 2 | 3 | 4 | 5 | 6 | 7 | 8 | 9 | 10 | 11 | 12 | 13 | 0 |
|---|---|---|---|---|---|---|---|---|---|---|---|---|---|---|---|
| 28 | D | D | D | D | D | D | D | D | D | D | D | D | F | U | D |

$t_{11}$ end of symbol number 11 in the synchronised cell   $t_{11'}$ end of symbol number 11′ in the non-synchronised cell

$t$

Fig. 7

| | | Symbol number in a slot | | | | | | | | | | | | | | |
|---|---|---|---|---|---|---|---|---|---|---|---|---|---|---|---|---|
| non-synchro-nised cell | Format | 0′ | 1′ | 2′ | 3′ | 4′ | 5′ | 6′ | 7′ | 8′ | 9′ | 10′ | 11′ | 12′ | 13′ | 0′ |
| | 44 | D | D | D | D | D | D | F | F | F | F | F | F | U | U | D |

| | | | | | | | | | | | | | | | | |
|---|---|---|---|---|---|---|---|---|---|---|---|---|---|---|---|---|
| synchronised cell | Format | 0 | 1 | 2 | 3 | 4 | 5 | 6 | 7 | 8 | 9 | 10 | 11 | 12 | 13 | 0 |
| | 28 | D | D | D | D | D | D | D | D | D | D | D | D | F | U | D |

$t_{11′}$ end of symbol number 11′ in the non-synchronised cell

$t_{11}$ end of symbol number 11 in the synchronised cell

t

Base station ∿ 10

∿ 20

Identification of degradation or loss of synchronisation

Radio resource management ∿ 30
- Admission control
- Transmission power
- Power control
- TDD pattern
- Resource allocation
- Scheduling
- Adaptive transmission bandwidth
- Adaptive modulation and coding
- ...

∿ 160

New methods ∿ 40

∿ 110

Measure i

Transmission power reduction ∿ 60 — 1

Limitation of beamforming ∿ 70 — 2

Air interface bandwidth limitation ∿ 80 — 3

TDD pattern adaptation ∿ 90 — 4

Adaptation of adaptive modulation and coding ∿ 100 — 5

Characteristics ∿ 50

∿ 120

j

Elapsed time after synchronisation loss ∿ 130 — 1

Synchronisation deviation ∿ 140 — 2

Traffic load ∿ 150 — 3

Artificial intelligence module ∿ 170

EP 3 907 906 A1

## Fig. 9

Matrix defining the new methods (index i) and their characteristics (index j) ∿ 200

$$\underline{THR} = \begin{pmatrix} THR_{11} & THR_{12} & \cdots & THR_{1j} \\ THR_{21} & THR_{22} & \cdots & THR_{2j} \\ \vdots & \vdots & \ddots & \vdots \\ THR_{i1} & THR_{i2} & \cdots & THR_{ij} \end{pmatrix}$$

∿ 260

Conjoint optimisation of the indices i and j of the decision matrix

∿ 230

Performance data from the out-of-synchronisation base station

Performance data from synchronised adjacent base stations

∿ 250

Artificial intelligence module ∿ 210

∿ 220

Performance in cells covered by the out-of-synchronisation base station

∿ 240

Performance in cells covered by synchronised base stations

Fig. 10

Self-healing time synchronisation procedure 340

Does the difference of the time base exceed a threshold? 330

yes

no

Verification of the link to the external master clock 310

Verification of synchronisation 300

Measurement of downlink signals from surrounding base stations 320

Initial definition of measures i, characteristics j and indices of the decision matrix $THR_{ij}$ 390

Is the synchronisation accuracy maintained? 350

yes 360

no 370

Execution of measures defined in the decision matrix 380

Performance measurements in cells of the considered base station and surrounding base stations 410

Verification of the success of executed measures by the artificial intelligence module 400

Update of the indices of the decision matrix 420

Europäisches
Patentamt

European
Patent Office

Office européen
des brevets

## EUROPEAN SEARCH REPORT

Application Number

EP 20 17 3273

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/260168 A1 (GHEORGHIU VALENTIN A [JP] ET AL) 14 October 2010 (2010-10-14) | 1,17 | INV.<br>H04B7/26<br>H04W56/00 |
| A | * figures 1, 2 *<br>* paragraph [0035] *<br>* paragraph [0040] - paragraph [0042] *<br>----- | 2-16 | |
| X | EP 1 273 111 A1 (INTERDIGITAL TECH CORP [US]) 8 January 2003 (2003-01-08) | 1-3,7,8,16,17 | |
| A | * figures 1, 5a, 5b *<br>* paragraph [0007] *<br>* paragraph [0017] *<br>* paragraph [0019] - paragraph [0020] *<br>* paragraph [0023] - paragraph [0024] *<br>* paragraph [0034] *<br>----- | 4-6,9-15 | |
| X | EP 3 160 059 A1 (IND TECH RES INST [TW]) 26 April 2017 (2017-04-26) | 1,3,7,17 | |
| A | * figures 1, 4 *<br>* paragraph [0003] *<br>* paragraph [0005] *<br>* paragraph [0019] *<br>* paragraph [0030] *<br>* paragraph [0038] *<br>* paragraph [0041] *<br>----- | 2,4-6,8-16 | TECHNICAL FIELDS SEARCHED (IPC)<br><br>H04B<br>H04W |

The present search report has been drawn up for all claims

| Place of search | Date of completion of the search | Examiner |
|---|---|---|
| The Hague | 15 October 2020 | Akhertouz Moreno, Y |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 17 3273

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2020

| Patent document cited in search report | Publication date | Patent family member(s) | Publication date |
|---|---|---|---|
| US 2010260168 A1 | 14-10-2010 | AU 2010234371 A1 | 03-11-2011 |
| | | BR PI1016047 A2 | 18-07-2017 |
| | | CA 2757578 A1 | 14-10-2010 |
| | | CN 102379143 A | 14-03-2012 |
| | | EP 2417809 A2 | 15-02-2012 |
| | | EP 2515592 A2 | 24-10-2012 |
| | | JP 5579826 B2 | 27-08-2014 |
| | | JP 2012523767 A | 04-10-2012 |
| | | KR 20110134518 A | 14-12-2011 |
| | | KR 20130052675 A | 22-05-2013 |
| | | RU 2011145031 A | 20-05-2013 |
| | | TW 201129181 A | 16-08-2011 |
| | | US 2010260168 A1 | 14-10-2010 |
| | | WO 2010118261 A2 | 14-10-2010 |
| | | ZA 201108159 B | 25-07-2012 |
| EP 1273111 A1 | 08-01-2003 | AT 319236 T | 15-03-2006 |
| | | AU 4985401 A | 30-10-2001 |
| | | BR 0110066 A | 28-01-2003 |
| | | CA 2406438 A1 | 25-10-2001 |
| | | CA 2553935 A1 | 25-10-2001 |
| | | CA 2691637 A1 | 25-10-2001 |
| | | CN 1531789 A | 22-09-2004 |
| | | CN 101005312 A | 25-07-2007 |
| | | CN 101005313 A | 25-07-2007 |
| | | CN 101005314 A | 25-07-2007 |
| | | DE 60117522 T2 | 12-10-2006 |
| | | DK 1273111 T3 | 10-07-2006 |
| | | DK 1605610 T3 | 16-06-2014 |
| | | EP 1273111 A1 | 08-01-2003 |
| | | EP 1605610 A2 | 14-12-2005 |
| | | EP 1659709 A2 | 24-05-2006 |
| | | ES 2259658 T3 | 16-10-2006 |
| | | ES 2475494 T3 | 10-07-2014 |
| | | HK 1066342 A1 | 29-06-2007 |
| | | HK 1106885 A1 | 09-12-2011 |
| | | HK 1106886 A1 | 14-03-2014 |
| | | HK 1106887 A1 | 05-04-2013 |
| | | IL 152104 A | 13-04-2008 |
| | | IL 189072 A | 30-04-2012 |
| | | JP 4846956 B2 | 28-12-2011 |
| | | JP 4847405 B2 | 28-12-2011 |
| | | JP 5112550 B2 | 09-01-2013 |
| | | JP 5174253 B2 | 03-04-2013 |
| | | JP 2003531552 A | 21-10-2003 |
| | | JP 2007312410 A | 29-11-2007 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.                    EP 20 17 3273

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2020

| Patent document cited in search report | Publication date | Patent family member(s) | Publication date |
|---|---|---|---|
| | | JP   2011244486 A | 01-12-2011 |
| | | JP   2012130055 A | 05-07-2012 |
| | | KR  20030023856 A | 20-03-2003 |
| | | KR  20050072153 A | 08-07-2005 |
| | | KR  20060086979 A | 01-08-2006 |
| | | MX   PA02009890 A | 27-05-2003 |
| | | MY       135748 A | 30-06-2008 |
| | | MY       137838 A | 31-03-2009 |
| | | MY       151409 A | 30-05-2014 |
| | | NO       326189 B1 | 13-10-2008 |
| | | TW       511361 B | 21-11-2002 |
| | | TW      I277350 B | 21-03-2007 |
| | | TW    200407045 A | 01-05-2004 |
| | | TW    200803390 A | 01-01-2008 |
| | | US   2002009168 A1 | 24-01-2002 |
| | | US   2002075978 A1 | 20-06-2002 |
| | | US   2006034407 A1 | 16-02-2006 |
| | | US   2008227474 A1 | 18-09-2008 |
| | | US   2011190015 A1 | 04-08-2011 |
| | | US   2013229983 A1 | 05-09-2013 |
| | | WO      0180461 A1 | 25-10-2001 |
| EP 3160059      A1   26-04-2017 | | CN    106612541 A | 03-05-2017 |
| | | EP     3160059 A1 | 26-04-2017 |
| | | EP     3389197 A1 | 17-10-2018 |
| | | TW    201715907 A | 01-05-2017 |
| | | US   2017118731 A1 | 27-04-2017 |
| | | US   2018295593 A1 | 11-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Time and phase synchronization aspects of telecommunication networks. *International Telecommunication Union,* 2017
- Technical Specification Group Radio Access Network; Evolved Universal Terrestrial Radio Access (E-UTRA); Physical layer procedures (Release 15). *3GPP TS 36.213,* 2019, www.3gpp.org
- Technical Specification Group Radio Access Network; NR; Physical layer procedures for control (Release 15). *3GPP TS 38.213,* 2019, www.3gpp.org

- Technical Specification Group Radio Access Network; Evolved Universal Terrestrial Radio Access (E-UTRA); User Equipment (UE) radio transmission and reception (Release 15). *3GPP TS 36.101,* 2019, www.3gpp.org
- Technical Specification Group Radio Access Network; Evolved Universal Terrestrial Radio Access (E-UTRA); Physical channels and modulation (Release 15). *3GPP TS 36.211,* 2019, www.3gpp.org
- Technical Specification Group Radio Access Network; NR; Base Station (BS) radio transmission and reception (Release 15). *3GPP TS 38.104,* 2019, www.3gpp.org